# EUROPÄISCHE PATENTSCHRIFT

(11) **EP 0 840 335 B1**
(45) Veröffentlichungstag und Bekanntmachung des Hinweises auf die Patenterteilung: **28.03.2001**
(21) Anmeldenummer: 97117798.5
(22) Anmeldetag: 14.10.1997
(51) Int. Cl.: H01H 3/16, B60Q 1/44, B60R 16/00

(54) **Selbstjustierender Stösselschalter, insbesondere KFZ-Bremslichtschalter**
Self-adjusting tappet-switch, in particular a brake ligth switch
Commutateur à poussoir autoréglable, en particulier un contacteur de stop

(30) Priorität: 31.10.1996 DE 19645059
(43) Veröffentlichungstag der Anmeldung: 06.05.1998
(73) Patentinhaber: TRW FAHRZEUGELEKTRIK GmbH & CO. KG, 78315 Radolfzell (DE)
(72) Erfinder: Elting, Ralf, 78315 Radolfzell (DE); Huber, Wolfgang, 86489 Deisenhofen (DE); Lange, Reinhard, 78343 Gaienhofen (DE)
(74) Vertreter: Eder, Thomas, Dr.-Ing.

(56) Entgegenhaltungen:
- EP-A- 0 349 367
- DE-C- 4 215 515
- FR-A- 2 441 258
- FR-A- 2 532 105
- GB-A- 2 282 005

## Beschreibung

Die Erfindung betrifft einen selbstjustierenden Stößelschalter, insbesondere KFZ-Bremslichtschalter, mit den Merkmalen des Oberbegriffs des Patentanspruchs 1.

Selbstjustierende Stößelschalter finden insbesondere als Bremslichtschalter Verwendung und gestatten den Ausgleich von Toleranzen zwischen der betreffenden Seite des den Schalter betätigenden Bremspedals und dem Halteblech des Fahrzeugs, in dem eine Öffnung zur Aufnahme und Halterung des Bremslichtschaltergehäuses vorgesehen ist.

Ein bekannter von der Anmelderin gefertigter Schalter weist einen Stößel auf, an dessen Umfang erste Rastelemente vorgesehen sind, welche mit zweiten, an einem Schieber vorgesehenen Rastelementen zusammenwirken. Der Schieber ist verschiebbar im Schaltergehäuse aufgenommen, wobei der Stößel durch das Zusammenwirken der ersten und zweiten Rastelemente im Schieber gehalten ist. Bei der Montage des Schalters im Halteblech des Fahrzeugs wird das Schaltergehäuse von der Oberseite (betrachtet in bezug auf das Bremspedal) des Halteblechs in eine in diesem vorgesehene Aufnahmeöffnung eingesetzt und der Stößel mit seinem Kopf gegen die Oberseite des Bremspedals gedrückt. In dieser Justier- und Montagestellung befindet sich der Stößel in der am weitesten aus dem Schaltergehäuse ragenden Position in Eingriff mit dem Schieber. Wird der Stößelkopf infolge der Anlage an die Oberseite des Bremspedals in Richtung auf die Oberseite des Schaltergehäuses zu bewegt, so wird das System Stößel-Schieber zunächst so weit in das Schaltergehäuse hineinbewegt, bis eine vorbestimmte Schaltposition erreicht ist. Diese ist vorzugsweise durch einen im Gehäuse befindlichen Anschlag für den Schieber definiert. Der Stößel des Schalters ist dabei zumindest so lange ausgebildet, daß diese Schaltposition beim Einsetzen des Schalters in die Aufnahmeöffnung des Halteblechs sicher erreicht wird. Ist der Abstand zwischen Halteblech und der Oberseite des Bremspedals kleiner als der für das Erreichen dieser Schaltposition erforderliche Verschiebeweg des Systems Stößel-Schieber, so wird beim Einsetzen des Schaltergehäuses in die Aufnahmeöffnung durch die Anlage des Stößelkopfs an die Oberseite des Bremspedals ein weiterer Druck auf den Stößel ausgeübt, wodurch die Schwellwertkraft für das rastende Verschieben des Stößels gegenüber dem Schieber überschritten wird und eine selbsttätige Justierung des Stößels erfolgt.

Nach dem vollständigen Einsetzen des Schalters in die Aufnahmeöffnung in diejenige Stellung, in welcher die Oberseite des Schaltergehäuses an der Unterseite des Halteblechs anliegt, wird der Stößelschalter durch eine Drehung um einen vorbestimmten Winkel in der Aufnahmeöffnung fixiert. Hierzu weist das Schaltergehäuse einen oder mehrere Vorsprünge auf, die beim Einsetzen des Schalters in die Aufnahmeöffnung in entsprechende Codierungsausnehmungen ragen und infolge des Verdrehens des Schaltergehäuses um die Längsachse des Schalters das Halteblech hintergreift.

Nachteilig bei diesen Schaltern ist jedoch, daß unter bestimmten Umständen eine ungewollte Verstellung der gewünschten Rastposition zwischen Stößel und Schieber auftreten kann. Dies kann beispielsweise durch eine Wärmeausdehnung von Schalterkomponenten oder eine Abnutzung der Rastbereiche verursacht sein. Auch ein Hantieren im Bereich des Schalters kann zu einer unbeabsichtigten Verstellung der gewünschten Rastposition (nach erfolgter Selbstjustierung) führen. Hierdurch ergibt sich eine Verschiebung des Schaltpunkts, so daß das Bremslicht erst ab einer bestimmten Stellung des Bremspedals eingeschaltet wird, in welcher bereits eine erhebliche Bremswirkung erreicht ist. Vor diesem Schaltpunkt erhält das diesem Fahrzeug nachfolgende Fahrzeug keinerlei Hinweis auf den bereits begonnenen Bremsvorgang.

Ein vergleichbare Schalter ist auch aus der DE-C-42 15 515 bekannt. Bei diesem Schalter sind ebenfalls an einem Schlitten mit Schaltkontakten und einem Stößel Verzahnungen vorgesehen, die ein rastendes Verstellen der axialen Relativposition zwischen Schlitten und Stößel erlauben. Um den Verschleiß der Verzahnungen zu vermeiden, sind die im Schlitten angeordneten Verzahnungen in radialer Richtung elastisch aufgehängt.

Die Anmelderin hat des Weiteren einen selbstjustierenden und verriegelbaren Stößelschalter entwickelt, wie er in der älteren, nicht vorveröffentlichten deutschen Patentanmeldung 196 03 135.4 beschrieben ist. Bei diesem Schalter kann das System Stößel-Schieber durch eine Verdrehung des Stößels um seine Längsachse aus einer Justierposition in eine verriegelte Position überführt werden, in welcher ein rastendes Verschieben des Stößels gegenüber dem Schieber nicht möglich ist.

Bei diesen bekannten Schaltern hat sich jedoch als Nachteil erwiesen, daß während des Justiervorgangs zunächst der Schieber mit dem Stößel in eine definierte Schaltstellung gebracht werden muß, bevor das Verschieben des Stößels gegenüber dem Schieber für den eigentlichen Justiervorgang erfolgt. Dies erfordert einen relativ langen Verschiebeweg während der Montage des Schalters und zum einen kann durch mechanische Toleranzen oder bei abgenutzten Rastmitteln bereits ein Verschieben des Stößels gegenüber dem Schieber erfolgen, ohne daß sich dieser in der vorbestimmten Schaltstellung befindet. Hierdurch kann ggf. der gewünschte Schaltpunkt nicht erreicht werden.

Der Erfindung liegt daher ausgehend von dem vorgenannten Stand der Technik die Aufgabe zugrunde, einen selbstjustierenden Stößelschalter zu schaffen, bei dem eine unbeabsichtigte Dejustierung des Systems Stößel-Schieber sicher vermieden wird, der auf einfache Weise eine fehlerhafte Montage praktisch ausschließt und eine hohe Funktions- und Montagesicherheit aufweist.

Die Erfindung löst die Aufgabe mit den Merkmalen des Patentanspruchs 1.

Die Erfindung geht von der Erkenntnis aus, daß während der Montage und des Justierens des Schalters der Schieber sich bereits in der gewünschten Schaltposition befinden sollte. Da während des eigentlichen Justiervorgangs der Schieber nicht mitbewegt werden muß, ergibt sich eine erhöhte Montage- und Funktionssicherheit. Nach dem Justiervorgang können Stößel und Schieber mittels der Eingriffsmittel verbunden werden, so daß erst dann eine Verschiebung des Schieber zur Erzeugung von Schaltbewegungen möglich und erforderlich ist.

Bei der Verwendung als Bremslichtschalter erfolgt die Erzeugung der Schaltbewegung durch eine Betätigung des Bremspedals. Hierbei ist zu beachten, daß derartige Schalter an einem Hebel des Bremspedals angeordnet sind, der sich bei einer Betätigung des Bremspedals in eine Richtung bewegt, die den Abstand zwischen dem Schalter und der betreffenden Ober- bzw. Unterseite des Hebels des Bremspedals vergrößert. Mit anderen Worten, bei einem Betätigen des Bremspedals wird der Stößel zusammen mit dem Schieber infolge der Beaufschlagung mit einem federnden Element aus dem Schaltergehäuse herausbewegt. Selbstverständlich kann der Schalter jedoch auch so ausgeführt werden, daß zur Betätigung der Kontakte der Stößel zusammen mit dem Schieber in das Schaltergehäuse hineinbewegt wird.

In der bevorzugten Ausführungsform der Erfindung ist der Schieber zumindest in der Montage- und Justierstellung des Systems Stößel-Schieber von einem federnden Element beaufschlagt und in der vorbestimmten Schaltstellung gehalten. Die Verbindung zwischen Stößel und Schieber in der Montage- und Justierstellung, die zumindest ab einer bestimmten auf das System wirkenden Kraft dessen Justierung ermöglichen soll, ist dabei so auf die Beaufschlagungskraft des federnden Elements abgestimmt, daß das Verschieben des Stößels gegen den Schieber in der Montage- und Justierstellung ohne ein Auslenken des Schiebers aus der Schaltstellung erfolgt. Stößel und Schieber können hierzu vorzugsweise so ausgebildet sein, daß in der Montage- und Justierstellung ein gleitendes Verschieben von Stößel und Schieber ermöglicht ist.

Bei der bevorzugten Ausführungsform der Erfindung ist auch der Stößel mittels eines federnden Elements beaufschlagt, so daß dieser in der Montage- und Justierstellung gegen einen Anschlag bewegt wird, der die Stößelbewegung in der Richtung aus dem Gehäuse heraus begrenzt.

Bei der bevorzugten Ausführungsform der Erfindung wird die vorbestimmte Schaltstellung des Schiebers durch einen Anschlag definiert, der nur in der Montage- und Justierstellung wirksam ist und der nach dem Überführen des Systems Stößel-Schieber in die verriegelte Stellung das Herausbewegen des Schiebers aus der Schaltstellung zur Aktivierung/Deaktivierung der Kontakte gestattet.

Ein derartiger Anschlag wird bei der bevorzugten Ausführungsform der Erfindung durch ein drehfest in einer Ausnehmung im Montageteil gehaltenes Distanzstück gebildet, in welchem der Stößel koaxial geführt ist.

Das Distanzstück und der Schieber weisen vorzugsweise Vorsprünge und/oder Ausnehmungen auf, welche (in der Verschieberichtung des Stößels) derart zusammenwirken, daß in der Justier- und Montagestellung der Schieber in der Schaltstellung gehalten ist und daß in der verriegelten Stellung die Vorsprünge und/oder Ausnehmungen ineinandergreifen und die Bewegung des Schiebers aus der Schaltstellung zur Aktivierung/Deaktivierung der Kontakte freigeben.

Die vorgenannten Ausführungsformen der Erfindung, bei denen das System Stößel-Schieber zur Erzeugung einer Schaltbewegung aus dem Gehäuse heraus bewegt wird, ergibt sich der Vorteil, daß auf einfache Weise eine Zerstörung oder Beschädigung des Schalters vermieden werden kann, wenn der Stößel und damit auch der Schieber nach dem Verriegeln des Systems StößelSchieber durch eine Fehlbetätigung nochmals weiter in das Schaltergehäuse hineinbewegt wird. Hierzu muß lediglich ein ausreichender Verschiebeweg für den Schieber innerhalb des Gehäuses vorgesehen sein. Mit anderen Worten, die Schaltstellung des Schiebers darf nicht durch einen weiteren Anschlag begrenzt werden, so daß eine Bewegung des Schiebers in das Gehäuse hinein blockiert würde.

Weitere Ausführungsformen der Erfindung ergeben sich aus den Unteransprüchen. Die Erfindung wird nachfolgend anhand in der Zeichnung dargestellter Ausführungsbeispiele näher erläutert. In der Zeichnung zeigen:
- Fig. 1a: eine perspektivische Darstellung eines Ausführungsbeispiels eines Schalters nach der Erfindung;
- Fig. 1b: die Kontur einer Montageöffnung für den Schalter gemäß Fig. 1a;
- Fig. 2: einen Längsschnitt durch den Schalter gemäß Fig. 1a in der Justier- und Montagestellung des Systems Stößel-Schieber und
- Fig. 3: einen Längsschnitt durch den Schalter gemäß den Fig. 1 und 2 in der montierten Stellung.

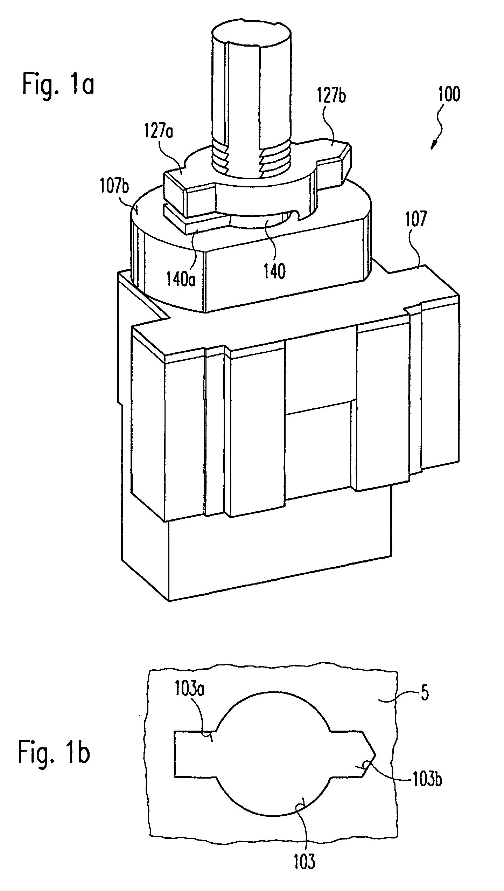

Die perspektivische Ansicht gemäß Fig. 1a zeigt einen Stößelschalter 100 mit einem Gehäuse 107, das eine Schulter 107b als Anschlag für das Einsetzen des Gehäuses 107 in eine Montageöffnung 103 (Fig. 1b) eines Montageteils 5 dient.

Der Stößelschalter 101 weist Befestigungsmittel 127a, 127b auf, welche für das Arretieren des Schalters im Montageteil 5 dienen. Die Montageöffnung 103 weist hierzu entsprechend geformte Codierungsausnehmungen 103a, 103b auf, so daß der Schalter von unten mit den Befestigungsmitteln 127a, 127b durch die Montageöffnung 103 geschoben werden kann, bis die Schulter 107b an der Unterseite des Montageteils 5 anliegt. In dieser Stellung kann der Schalter durch ein Verdrehen des Schaltergehäuses mit dem Montageteil 5 verbunden bzw. arretiert werden.

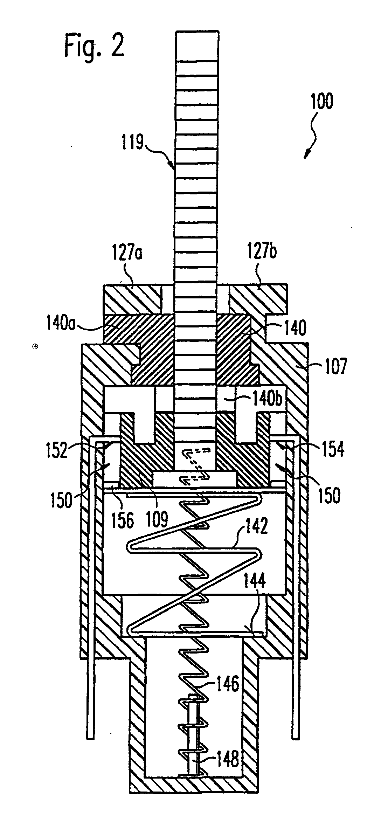

Wie aus den Fig. 1a und 2 ersichtlich, ist im oberen Bereich des Gehäuses 107 ein gegenüber dem Gehäuse drehbares Distanzstück 140 vorgesehen, welches eine Nase 140a aufweist, die ebenfalls im wesentlichen der Form der Codierungsausnehmung 103a entspricht.

Für das Einschieben des Schalters 100 in die Montageöffnung 103 des Montageteils 5 wird das Distanzstück 140 gegenüber dem Gehäuse 107 so gedreht, daß die Nase 140a im wesentlichen mit dem Befestigungsmittel 127a fluchtet. Damit greift die Nase 140a in die Codierungsausnehmung 103a ein, wenn das Gehäuse 107 mit seiner Schulter 107b an der Unterseite des Montageteils 5 anliegt.

Der Stößel 119 ist koaxial zur Drehachse des Distanzstücks 140 gegenüber dem Gehäuse 107 durch eine entsprechende Ausnehmung im Distanzstück 140 verschiebbar geführt. Der Querschnitt des Stößels und der Ausnehmung im Distanzstück 140 sind dabei so gewählt, daß der Stößel 119 drehfest im Distanzstück 140 gehalten ist. Somit erfolgt bei einer drehfesten Halterung des Distanzstücks 140 mittels der Nase 140a in der Codierungsausnehmung 103a auch eine drehfeste aber in der Schalterlängsachse verschiebbare Lagerung des Stößels 119 im Distanzstück 140.

Hierdurch wird erreicht, daß bei einem Verdrehen des Gehäuses 107 des Schalters 100 auch eine Verdrehung und hierdurch bewirkte Verriegelung des Systems Stößel-Schieber einhergeht.

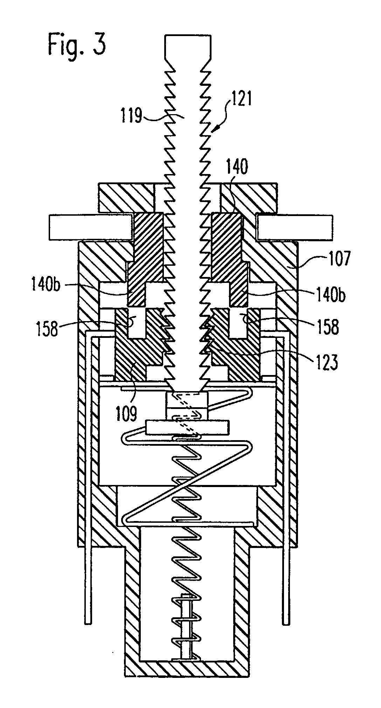

Um eine Verriegelung zu ermöglichen, weist der Stößel, vorzugsweise an gegenüberliegenden Längsseiten, Rastmittel 121 auf, die, wie in Fig. 3 dargestellt, als sägezahnförmige Rastverzahnung ausgebildet sein kann. Die Rastmittel 121 wirken mit komplementären Eingriffsmitteln 123 zusammen, die an der Innenwandung des im wesentlichen ringförmig ausgebildeten Schiebers 109 vorgesehen sind. Bei nicht-verriegeltem System Stößel-Schieber wird ein gleitendes Verschieben des Stößels gegenüber dem Schieber ermöglicht, indem die Rastmittel 121 außer Eingriff mit den komplementären Eingriffsmitteln 123 gebracht werden.

Für das Montieren des Stößelschalters 100 in der Montageöffnung 103 werden Stößel 119 und Distanzstück 140 in die in den Fig. 1a und 2 dargestellte Justier- und Montagestellung gebracht, in der das gleitende Verschieben des Stößels 119 gegenüber dem Schieber 109 möglich ist.

In dieser Position befindet sich der Schieber bereits in der gewünschten, in den Fig. 2 und 3 dargestellten Schaltstellung. Diese wird durch die beiden Fortsätze 140b an der Unterseite des Distanzstücks 140 definiert, wobei der Schieber 109 mit seiner Oberseite durch die Beaufschlagung mittels der Feder 142 gegen die Anschlagflächen der Fortsätze 140b gedrückt wird. Die Feder 142 beaufschlagt hierzu einerseits die Unterseite des Schiebers 109 und andererseits eine Schulter 144 im unteren Bereich des Gehäuses 107.

Des Weiteren ist eine weitere Feder 146 vorgesehen, welche mit ihrem oberen Ende in einer Ausnehmung in der Unterseite des Stößels 119 aufgenommen ist und welche mit dem anderen Ende den Boden des Gehäuses 107 beaufschlagt. Am Boden des Gehäuses 107 kann die Feder 146 mittels eines Stifts 148 gehalten sein.

Die in Fig. 2 dargestellte Schaltstellung des Schiebers 109 ist so gewählt, daß nach einem Wegfall der Anschlagwirkung der Fortsätze 140b (nachstehend erläutert) ein ausreichender Schaltweg für das Betätigen eines Kontakts 150 entsteht. Der Kontakt 150 besteht dabei aus zwei Kontaktelementen 152, 154, welche mittels eines elektrisch leitenden Elements 156 an der Unterseite des Schiebers 109 verbunden werden können.

Beim Einsetzen des Schalters 100 in die Montageöffnung 103 wird zunächst der Kopf des Stößels mit der betreffenden Seite eines Betätigungselements in Kontakt gebracht. Daraufhin wird der Schalter so weit in Richtung auf das Betätigungselement (nicht dargestellt) zu bewegt, bis die Schulter 107b an der Unterseite des Montageteils 5 anliegt. Bei diesem Vorgang wird der Stößel 5 gleitend relativ zum Schieber 109 verschoben, wobei der Schieber 109 über die Feder 142 in der in Fig. 2 dargestellten Schaltstellung gehalten ist.

Anschließend wird in der bereits beschriebenen Weise das Gehäuse 107 des Schalters um einen vorbestimmten Winkelbetrag, beispielsweise 90°, verdreht und damit das System StößelSchieber verriegelt. Diese verriegelte Position ist in Fig. 3 dargestellt. Mit dem Verdrehen des Gehäuses 107 und damit des Schiebers 109 gegenüber dem Distanzstück 140 wird gleichzeitig erreicht, daß die Fortsätze 140b ihre Wirkung als Anschlag verlieren, da sie, wie in Fig. 3 dargestellt, nunmehr entsprechenden Ausnehmungen 158 in der Oberseite des Schiebers 109 gegenüberstehen.

Auf diese Weise wird bei einer Bewegung des (nicht dargestellten) Betätigungselements vom Montageteil 5 weg ein Schaltweg des Schiebers 109 in derselben Richtung ermöglicht. Bei der Verschiebung des Schiebers 109 bzw. des Systems Stößel-Schieber greifen die Fortsätze 140b in die Ausnehmungen 158 ein. Nach Zurücklegen eines gewissen Verschiebewegs werden dann die Kontaktelemente 152, 154 über das elektrisch leitende Elemente 156 leitend verbunden und damit der Kontakt geschlossen.

Bei dem in den Fig. 1 bis 3 dargestellten Schaltertyp kann auf sehr einfache Weise verhindert werden, daß bei einer Bewegung des Betätigungselements entgegen der eigentlichen Betätigungsrichtung der Schalter beschädigt oder gar zerstört wird: Hierzu muß lediglich sichergestellt werden, daß dem Schieber bzw. dem System Stößel-Schieber, ausgehend von der in den Fig. 2 und 3 dargestellten Schaltstellung, ein ausreichender Verschiebeweg in die betreffende Betätigungsrichtung (in den Fig. 2 und 3 nach unten) zur Verfügung steht. Bei diesem Schaltertyp ist es somit nicht erforderlich, den Nachlauf durch eine entsprechende Mechanik im Stößel oder dergleichen zu realisieren. Auch ist gegenüber derartigen Konstruktionen keine zusätzliche Feder erforderlich.

Wie aus Fig. 3 ersichtlich, ist die sägezahnförmige Rastverzahnung 121 so ausgeführt, das jeder Zahn eine im wesentlichen horizontal verlaufende obere und eine schräg verlaufende untere Fläche aufweist. Die komplementären Eingriffsmittel 123 des Schiebers 109 sind entsprechend ausgebildet. Die Anfangsbereiche jeder der beiden Rastverzahnungen 121 und/oder der Eingriffsmittel 123, die bei einem ersten Aufeinandertreffen während der Drehung des Schiebers 109 zusammen mit dem Gehäuse 107 zur Verriegelung des Systems Stößel-Schieber zusammenwirken sind vorzugsweise so ausgebildet, daß keine Stirnflächen stumpf aufeinandertreffen und die Drehung bzw. das Verriegeln blockiert wird.

Die Anfangsbereiche können hierzu eine im wesentlichen in azimutaler Richtung verlaufende Schräge aufweisen, so daß die ansonsten entstehenden im wesentlichen in radialer Richtung verlaufenden Stirnflächen der Anfangsbereiche weitestgehend zu einer "Anfangsschneide" reduziert ist. Die in azimutaler Richtung verlaufende Schräge ist dabei so ausgeführt, daß bei einem Aufeinandertreffen der Anfangsbereiche der Rastverzahnungen 121 und der Eingriffsmittel 123 mit leicht versetzten Verzahnungen der Stößel bei feststehendem Schieber solange in das Schaltergehäuse 107 hineinbewegt wird, bis sich die Verzahnungen in der korrekten komplementären Eingriffsstellung befinden.

Beispielsweise kann hierzu die gemäß Fig. 3 im wesentlichen horizontal verlaufende Unterseite jedes Sägezahns der Eingriffsmittel 123 in dessen Anfangsbereich in azimutaler Richtung eine Schräge aufweisen, die von der darüberliegenden schrägen Fläche schräg in Richtung der horizontal verlaufenden Unterseite verläuft.

Gleichzeitig kann die sehr kleine Stirnfläche bzw. stirnseitig "Schneide" jedes Anfangsbereichs eines Sägezahns nicht mehr in radialer Richtung sondern derart schräg verlaufen, daß bei einem Ineinandergreifen der Anfangsbereiche der Verzahnungen von Stößel und Schieber zuerst die radial äußeren Bereiche und erst ab einer gewissen Überlappung der Verzahnungen die einzelnen Zähne voll im Sinne eines vollständigen Ineinander-Eingreifens zusammenwirken.

Selbstverständlich können anstelle der Unterseiten der Zähne des Schiebers auch die Oberseiten der Zähne des Stößels mit entsprechenden komplementären Schrägen versehen sein.

Durch die Erfindung wird die Montage- und Funktionssicherheit des Stößelschalters gegenüber bekannten Schaltern in hohem Maße verbessert.

Abweichend von dem dargestellten speziellen Ausführungsbeispiel kann die Verriegelung des Systems Stößel-Schieber nicht nur durch eine Relativdrehbewegung der Teile zueinander, sondern in beliebiger anderer Weise erfolgen. Z.B. kann der Schieber in einer zur Stößelachse senkrechten Ebene verschoben werden, um entsprechende Eingriffsmittel in Eingriff zu bringen, oder nach dem Justieren der Stößel mit dem Schieber durch Einsetzen eines Verbindungsteils, z.B. durch eine Gehäuseöffnung, verbunden werden.

Auch können das Verriegeln des Systems Stößel-Schieber und das Freigeben des Schaltwegs, d.h. das ggf. erforderliche Unwirksammachen eines Anschlag, durch getrennte Aktionen bewirkt werden. Beispielsweise kann das Verriegeln durch das beschriebene Verdrehen des Stößels gegen den Schieber erfolgen und das Ausschalten der Anschlagswirkung durch ein separates Verdrehen oder translatorisches Bewegen eines Anschlagselements.

Anstelle eines Anschlags zur Halterung des Schieber in der vorbestimmten Schaltstellung (in der Montage- und Justierstellung) kann der Schieber auch durch eine oder mehrere (z.B. oberhalb und unterhalb des Anschlags vorgesehene) Federn in der gewünschten Stellung gehalten und ggf. aus der dadurch definierten Ruhelage beidseitig zur Erzeugung von jeweiligen Schaltbewegungen auslenkbar sein.

## Patentansprüche

1. Selbstjustierender Stößelschalter, insbesondere KFZ-Bremslichtschalter,
a) mit einem in einem Gehäuse (107) geführten Schieber (109) zur Betätigung eines oder mehrerer Kontakte (150) und
b) mit einem gegenüber dem Schieber (109) in Richtung dessen Verschieberichtung verschiebbaren Stößel (119),
**dadurch gekennzeichnet,**
c) daß der Schieber (109) erste Eingriffsmittel (123) und der Stößel (119) zweite Eingriffsmittel (121) aufweisen, mit welchen Schieber und Stößel rastend verbindbar und/oder verriegelbar sind, wobei das System Stößel-Schieber aus einer Montage- und Justierstellung, in welcher der Stößel (119) und der Schieber (109) gegeneinander verschiebbar sind, in eine verriegelte Stellung überführbar sind und umgekehrt,
d) daß der Schieber (109) in der Montage- und Justierstellung des Systems Stößel-Schieber derart in einer vorbestimmten Schaltstellung gehalten ist, daß das Verschieben des Stößels (119) gegen den Schieber (109) während des Justiervorgangs ohne ein Auslenken des Schiebers erfolgt, und
e) daß erst nach dem Überführen des Systems Stößel-Schieber in die verriegelte Stellung dessen Verschieben aus der vorbestimmten Schaltstellung möglich ist.

2. Stößelschalter nach Anspruch 1, **dadurch gekennzeichnet**, daß der Schieber von einem federnden Element (142) beaufschlagt in der vorbestimmten Schaltstellung gehalten ist.

3. Stößelschalter nach Anspruch 2, **dadurch gekennzeichnet**, daß der Stößel (119) in der Montage- und Justierstellung gegenüber dem Schieber (109) gleitend gegen die Kraft eines federnden Elements (146) verschiebbar ist.

4. Stößelschalter nach einem der vorhergehenden Ansprüche, **dadurch gekennzeichnet**, daß die Schaltstellung durch einen nur in der Montage- und Justierstellung wirksamen Anschlag definiert ist.

5. Stößelschalter nach Anspruch 4, **dadurch gekennzeichnet**, daß der Stößel (119) drehfest aber verschiebbar in einem drehbar im Gehäuse (107) gehaltenen Distanzstück (140) gehalten ist, und daß der Anschlag (140a) durch das Distanzstück gebildet ist.

6. Stößelschalter nach Anspruch 5, **dadurch gekennzeichnet**, daß das Distanzstück (140) und der Schieber (109) Vorsprünge (140a) und/oder Ausnehmungen (158) aufweisen, welche derart zusammenwirken, daß in der Justier- und Montagestellung ein Anschlag für den Schieber (109) gebildet ist und daß in der verriegelten Stellung die Vorsprünge und/oder Ausnehmungen ineinandergreifen und die Bewegung des Schiebers aus der Schaltstellung zur Aktivierung/Deaktivierung des oder der Kontakte (150) freigeben.

7. Stößelschalter nach einem der vorhergehenden Ansprüche, **dadurch gekennzeichnet**, daß das Gehäuse (107) so ausgebildet ist, daß eine Bewegung des Systems Stößel-Schieber nach dem Verriegeln in der vom freien Ende des Stößels abgewandten Richtung ermöglicht ist.

8. Stößelschalter nach einem der vorhergehenden Ansprüche, **dadurch gekennzeichnet**, daß der Stößel (119) oder der Schieber (109) bzw. das Distanzstück (140) im Querschnitt so geformt sind, daß der Stößel (119) oder der Schieber (109) beim Einsetzen in eine Montageöffnung (103) in einem Montageteil (5) drehfest aber verschiebbar gehalten ist, während das jeweils andere Teil im Gehäuse (107) drehfest aber verschiebbar gehalten ist.

9. Stößelschalter nach Anspruch 8, **dadurch gekennzeichnet**, daß am Gehäuse erste Befestigungsmittel (127a, 127b) vorgesehen sind, welche durch eine Drehung des Gehäuses mit an einem Montageteil (5) vorgesehenen zweiten Befestigungsmitteln in Eingriff bringbar sind, wobei mit dieser Drehung auch gleichzeitig das System Stößel-Schieber aus der Justier- und Montagestellung in die verriegelte Stellung überführbar sind, und umgekehrt.

## Claims

1. Self-adjusting tappet switch, in particular motor-vehicle brake-light switch,
a) with a slide (109) which is guided in a housing (107) and is intended for actuating one or more contacts (150), and
b) with a tappet (119) which can be displaced in relation to the slide (109) in the displacement direction of the latter,
characterized
c) in that the slide (109) has first engagement means (123) and the tappet (119) has second engagement means (121), by means of which the slide and tappet can be connected with latching action and/or locked, in which case the tappet/slide system can be transferred from an installation and adjusting position, in which the tappet (119) and the slide (109) can be displaced in relation to one another, into a locked position and vice versa,
d) in that, in the installation and adjusting position of the tappet/slide system, the slide (109) is retained in a predetermined switching position such that the displacement of the tappet (119) in relation to the slide (109) during the adjusting operation takes place without the slide being deflected, and
e) in that it is only after the tappet/slide system has been transferred into the locked position that it is possible to displace it from the predetermined switching position.

2. Tappet switch according to Claim 1, characterized in that the slide is retained in the predetermined switching position under the action of a resilient element (142).

3. Tappet switch according to Claim 2, characterized in that, in the installation and adjusting position, the tappet (119) can be displaced in relation to the slide (109) with sliding action counter to the force of the resilient element (146).

4. Tappet switch according to one of the preceding claims, characterized in that the switching position is defined by a stop which is only active in the installation and adjusting position.

5. Tappet switch according to Claim 4, characterized in that the tappet (119) is retained in a rotationally fixed but displaceable manner in a spacer (140), which is retained in a rotatable manner in the housing (107), and in that the stop (140a) is formed by the spacer.

6. Tappet switch according to Claim 5, characterized in that the spacer (140) and the slide (109) have protrusions (140a) and/or recesses (158), which interact such that, in the adjusting and installation position, a stop is formed for the slide (109), and that, in the locked position, the protrusions and/or recesses interengage and release the movement of the slide from the switching position for activating/deactivating the contact or contacts (150).

7. Tappet switch according to one of the preceding claims, characterized in that the housing (107) is designed such that it is possible for the tappet/slide system to move, following the locking operation, in the direction away from the free end of the tappet.

8. Tappet switch according to one of the preceding claims, characterized in that the tappet (119) or the slide (109) and the spacer (140) are shaped cross-sectionally such that, upon insertion into an installation opening (103) in an installation part (5), the tappet (119) or the slide (109) is retained in a rotationally fixed but displaceable manner, while the respectively other part is retained in a rotationally fixed but displaceable manner in the housing (107),

9. Tappet switch according to Claim 8, characterized in that provided on the housing are first fastening means (127a, 127b) which, by virtue of a rotation of the housing, can be brought into engagement with second fastening means, which are provided on an installation part (5), it also being possible at the same time as this rotation for the tappet/slide system to be transferred from the adjusting and installation position into the locked position and vice versa.

## Revendications

1. Commutateur à poussoir autoréglable, notamment contacteur de feux stop dans un véhicule automobile, comportant
a) un coulisseau (109) guidé dans un boîtier (107) servant à actionner un ou plusieurs contacts (150), et
b) un poussoir (119), qui peut être déplacé par rapport au coulisseau (109) dans la direction de déplacement de ce dernier,
caractérisé en ce
c) que le coulisseau (109) comporte des premiers moyens d'engrènement (123) et le poussoir (119) comporte des seconds moyens d'engrènement (121), moyens à l'aide desquels le coulisseau et le poussoir peuvent être reliés et/ou verrouillés par encliquetage, le système à poussoir-coulisseau pouvant être commuté d'une position de montage et d'ajustement, dans laquelle le poussoir (119) et le coulisseau (109) sont déplaçables l'un par rapport à l'autre, dans une position verrouillée et inversement,
d) que lorsque le système poussoir-coulisseau est dans la position de montage et d'ajustement, le coulisseau (109) est retenu dans une position de commutation prédéterminée de telle sorte que le déplacement du poussoir (119) contre le coulisseau (109) pendant le processus d'ajustement s'effectue sans déviation du coulisseau, et
e) qu'après le passage du système poussoir-coulisseau dans la position verrouillée, le déplacement de ce système est possible à partir de la position de commutation prédéterminée.

2. Commutateur à poussoir selon la revendication 1, caractérisé en ce que le coulisseau est retenu dans la position de commutation prédéterminée en étant chargé par un élément élastique (142).

3. Commutateur à poussoir selon la revendication 2, caractérisé en ce que dans la position de montage et d'ajustement, le poussoir (119) est déplaçable par glissement par rapport au coulisseau (109) à l'encontre de la force d'un élément élastique (146).

4. Commutateur à poussoir selon l'une des revendications précédentes, caractérisé en ce que la position de commutation est définie par une butée qui agit uniquement dans la position de montage et d'ajustement.

5. Commutateur à poussoir selon la revendication 4, caractérisé en ce que le poussoir (119) est retenu avec blocage en rotation, mais avec possibilité de translation dans une entretoise (140) qui est retenue de manière à pouvoir tourner dans le boîtier (107) et que la butée (140a) est formée par l'entretoise.

6. Commutateur à poussoir selon la revendication 5, caractérisé en ce que l'entretoise (140) et le coulisseau (109) comportent des parties saillantes (140a) et/ou des évidements (158), qui coopèrent de telle sorte que dans la position d'ajustement et de montage, une butée est formée pour le coulisseau (109) et que, dans la position verrouillée, les parties saillantes et/ou les évidements engrènent réciproquement et libèrent le déplacement du coulisseau à partir de la position de commutation pour l'activation et/ou la désactivation du ou des contacts (150).

7. Commutateur à poussoir selon l'une des revendications précédentes, caractérisé en ce que le boîtier (107) est agencé de telle sorte qu'un déplacement du système poussoir-coulisseau est possible, après le verrouillage, dans la direction tournée à l'opposé de l'extrémité libre du poussoir.

8. Commutateur à poussoir selon l'une des revendications précédentes, caractérisé en ce que le poussoir (119) ou le coulisseau (109) et l'entretoise (140) sont agencés en coupe transversale de telle sorte que lors de l'insertion dans une ouverture de montage (103) dans une partie de montage (5), le poussoir (119) ou le coulisseau (109) est retenu, d'une manière bloquée en rotation, mais avec possibilité de translation, tandis que l'autre partie respective est retenue dans le boîtier (107) avec blocage en rotation, et avec possibilité de translation.

9. Commutateur à poussoir selon la revendication 8, caractérisé en ce que sur le boîtier sont prévus des premiers moyens de fixation (127a, 127b) qui, par le biais d'une rotation du boîtier, peuvent être amenés à engrener avec des seconds moyens de fixation prévus sur une partie de montage (5), auquel cas sous l'effet de cette rotation, le système poussoir-coulisseau peut être également commuté simultanément de la position d'ajustement et de montage dans la position verrouillée et inversement.
